Europäisches Patentamt

European Patent Office

Office européen des brevets

(19)

(11) Publication number: **0 479 391 A1**

# EUROPEAN PATENT APPLICATION

(12)

(21) Application number: **91202589.7**

(22) Date of filing: **03.10.91**

(51) Int. Cl.5: **A01G 31/00**

(30) Priority: **05.10.90 NL 9002170**

(43) Date of publication of application:
**08.04.92 Bulletin 92/15**

(84) Designated Contracting States:
**BE DE DK FR GB NL SE**

(71) Applicant: **VISSER 'S-GRAVENDEEL HOLDING B.V.**
**Postbus 5013**
**NL-3295 ZG 's-Gravendeel(NL)**

(72) Inventor: **Visser, Anthony**
**Seringenstraat 43**
**NL-3295 RN 's-Gravendeel(NL)**

(74) Representative: **de Bruijn, Leendert C. et al**
**Nederlandsch Octrooibureau**
**Scheveningseweg 82 P.O. Box 29720**
**NL-2502 LS 's-Gravenhage(NL)**

(54) **Pot of mineral wool or the like for growing a seedling or cutting.**

(57) A pot for growing a seedling or cutting, comprising a body (1) of mineral wool or the like, preferably in the form of a parallelepiped which is provided in the top surface with an opening (3) of a predetermined depth for taking the seedling or the cutting.

There is at least one through channel (4) which extends from the bottom surface to the top surface for providing a circulation of moistair along the seedling or cutting.

The invention relates to a pot for growing a seedling or cutting, comprising a body of mineral wool or the like, preferably in the form of a parallelepiped, which is provided in the top surface with an opening of a predetermined depth for taking the seedling or cutting.

Such a pot is known from EP-BI-0,176,134.

Such pots are placed during the growing on a heated floor which is irrigated in an ebb and flow manner with water and/or nutrients.

During the flow a considerable part of the height of the pot can be immersed.

During the ebb the liquid evaporates from the pot through the heating, so that the pot becomes to some extent dry again.

The known pot is provided with slits in the bottom face, which slits are connected to at least one of the side faces.

The water can consequently flow away during the ebb, and during heating and thus evaporation no vacuum is created between the floor and the pot.

Air circulation is not, however, obtained.

The object of the invention is to improve this known pot, so that during ebb and heating a rising air stream is produced, which activates growth of the seedling or the cutting.

This object is achieved according to the invention in that at least one through channel extends from the bottom surface to the top surface.

The channel(s) between top and bottom surface cause(s) a vertical air stream to be produced during ebb and heating, which conveys moist air along the seedling or the cutting, so that growth is greatly promoted.

Preferred embodiments of the invention follow from the sub-claims.

The invention will be explained in greater detail with reference to a perspective, partially cut-away drawing.

The pot preferably has a body 1 in the form of a right-angled parallelepiped, and is made in the known manner of mineral wool.

The side walls are surrounded by a plastic film 2 which is impervious to water and light.

In the centre of the top surface is an opening 3 of a certain depth, designed to take a seedling or a cutting (not shown).

Thus far the pot is conventional.

According to the invention, at least one channel 4 extends over the entire height of the pot. Four of such channels are preferably used, near the vertical ribs of the pot.

In order to reduce the contact surface between the pot and the floor on which the pot has to be placed, cavities 5 of limited height extending from the bottom surface are provided, said cavities being connected to the channels 4.

Said cavities 5 can be circular cylindrical as shown, but can also be elliptical, rectangular etc. Moreover, the cavities 5 can be centred with the channels 4 or otherwise. The cross-section of the channels need not be round.

The cavities can also be the shape of a truncated cone.

Those shapes of the channels 4 and of the cavities 5 which are most easily formed with drilling and/or grinding devices or with other known devices are selected.

Connecting slits, indicated by 6, also preferably run between the central opening 3 and the channels 4.

Said slits 6 need not extend over the entire depth of the opening 3.

A very good rising air stream is found to be produced with the pot according to the invention, so that during ebb and heating moist warm air flows along the seedling or the cutting, with the result that growth is greatly promoted.

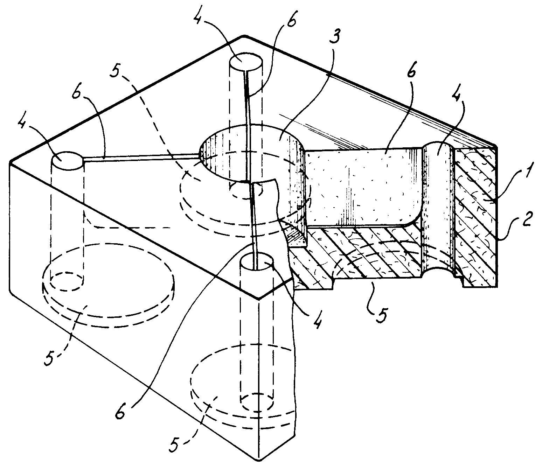

**Claims**

1. Pot for growing a seedling or cutting, comprising a body of mineral wool or the like, preferably in the form of a parallelepiped which is provided in the top surface with an opening of a predetermined depth for taking the seedling or the cutting, **characterized in that** at least one through channel extends from the bottom surface to the top surface.

2. Pot according to Claim 1, **characterized in that** four of such channels extend all the way round the opening for the seedling or the cutting, but at a distance therefrom.

3. Pot according to Claim 1 or 2, **characterized in that** slit-shaped passages extend between the said opening and at least one of the channels or the channel.

4. Pot according to Claim 3, **characterized in that** the slit-shaped passages extend over the entire depth of the said opening.

5. Pot according to one or more of the preceding claims, **characterized in that** in the bottom surface at least one cavity is formed, extending over a small part of the height of the pot and in which a channel opens, which cavity is several times wider than the channel.

6. Pot according to Claim 5, **characterized in that** as many cavities as channels are present.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 389 355 (ISOVER)<br>* column 4, line 34 - line 48; claim 1; figures 2,3 *<br>--- | 1 | A01G31/00 |
| A | NL-A-7 908 582 (DÜMMEN)<br>* page 3, line 21 - page 5, line 1; figures 1-5 *<br>--- | 1 | |
| A | WO-A-8 803 747 (VAN WINGERDEN)<br>* page 7, paragraph 2 - page 9, paragraph 1; figures 1-3 *<br>----- | 1 | |
| | | | **TECHNICAL FIELDS SEARCHED (Int. Cl.5 )**<br><br>A01G |

The present search report has been drawn up for all claims

| Place of search | Date of completion of the search | Examiner |
|---|---|---|
| THE HAGUE | 09 JANUARY 1992 | HERYGERS J.J. |